# EUROPEAN PATENT APPLICATION

(11) **EP 4 167 085 A1**
(43) Date of publication of application: **19.04.2023**
(21) Application number: 21828729.0
(22) Date of filing: 09.06.2021
(51) Int. Cl.: G06F 9/455

(54) **CAPACITY REDUCTION/EXPANSION METHOD AND SYSTEM FOR CLUSTER, CAPACITY REDUCTION/EXPANSION CONTROL TERMINAL AND MEDIUM**

(30) Priority: 24.06.2020 CN 202010589248
(71) Applicant: ZTE Corporation, Shenzhen, Guangdong 518057 (CN)
(72) Inventor: ZHANG, Zhou, Shenzhen, Guangdong 518057 (CN); WANG, Shoulin, Shenzhen, Guangdong 518057 (CN); MA, Youchang, Shenzhen, Guangdong 518057 (CN)
(74) Representative: Canzler & Bergmeier Patentanwälte Partnerschaft mbB
(86) International application number: PCT/CN2021/099171
(87) International publication number: WO 2021/259064

(57) **Abstract**

A capacity reduction/expansion control terminal, a computer readable medium and a capacity reduction/expansion system for a cluster. A capacity reduction/expansion method for a cluster comprises: acquiring performance data of a target cluster (S 1); determining, according to the performance data, whether the target cluster needs capacity expansion or capacity reduction (S2); when it is determined that the target cluster needs capacity expansion, controlling a cloud platform to create a first virtual host, and adding the first virtual host into the target cluster (S3); and when it is determined that the target cluster needs capacity reduction, controlling the cloud platform to remove a second virtual host from the target cluster (S4).

## Description

### CROSS REFERENCE TO RELATED APPLICATIONS

The present disclosure claims the priority to the Chinese Patent Application No. 202010589248.1 filed with the CNIPA on June 24, 2020, the entire contents of which are incorporated herein by reference.

### TECHNICAL FIELD

The present disclosure relates to, but is not limited to, the technical field of communications.

### BACKGROUND

With the development of communication technology and network technology, most of communication systems and network systems have higher load requirements, and are faced with demands for capacity reduction or capacity expansion with a change of services. For example, for a management domain of a core network in 5G communication, due to large-scale deployment of 5G network slices, the management domain of the core network will need to manage more virtualized service elements to cope with a faster change of the slices; and for a service platform providing microservices, due to the characteristics of applications deployed in the microservices, the service platform will also need to manage more virtualized service elements to meet application deployment requirements.

### SUMMARY

In the first aspect, the present disclosure provides a capacity reduction and capacity expansion method for a cluster, including: acquiring performance data of a target cluster; determining whether the target cluster needs capacity expansion or capacity reduction according to the performance data; when it is determined that the target cluster needs the capacity expansion, controlling a cloud platform to create a first virtual host, and adding the first virtual host to the target cluster; and when it is determined that the target cluster needs the capacity reduction, controlling the cloud platform to remove a second virtual host from the target cluster.

In the second aspect, the present disclosure further provides a capacity reduction and capacity expansion control terminal, including: one or more processors; and a storage device configured to store one or more programs which, when executed by the one or more processors, cause the one or more processors to carry out the method described herein.

In the third aspect, the present disclosure further provides a computer-readable medium having a computer program stored thereon which, when executed by a processor, causes the processor to carry out the method described herein.

In the fourth aspect, the present disclosure further provides a capacity reduction and capacity expansion system for a cluster, including: a capacity reduction and capacity expansion control terminal and a cloud platform; wherein the capacity reduction and capacity expansion control terminal is the capacity reduction and capacity expansion control terminal described herein.

### BRIEF DESCRIPTION OF DRAWINGS

FIG. 1 is a flowchart illustrating a capacity reduction and capacity expansion method for a cluster according to the present disclosure;
FIG. 2 is a flowchart of an exemplary implementation of operation S1 shown in FIG. 1;
FIG. 3 is a flowchart of an exemplary implementation of operation S101 shown in FIG. 2;
FIG. 4 is a flowchart of an exemplary implementation of operation S3 shown in FIG. 1;
FIG. 5 is a flowchart illustrating a capacity reduction and capacity expansion method for a cluster according to the present disclosure;
FIG. 6 is a block diagram of a capacity reduction and capacity expansion system for a cluster according to the present disclosure; and
FIG. 7 is a block diagram of a performance data collector according to the present disclosure.

### DETAIL DESCRIPTION OF EMBODIMENTS

In order to enable those of ordinary skill in the art to better understand the technical solutions of the present disclosure, the capacity reduction and capacity expansion method for a cluster, the capacity reduction and capacity expansion control terminal, the computer-readable medium and the capacity reduction and capacity expansion system for a cluster provided by the present disclosure are described in detail below with reference to the drawings.

Exemplary implementations will be described more fully below with reference to the drawings, but the exemplary implementations illustrated may be embodied in different forms, and should not be interpreted as being limited to the implementations described herein. Rather, the implementations are provided to make the present disclosure thorough and complete, and are intended to enable those of ordinary skill in the art to fully understand the scope of the present disclosure.

The terms used herein are merely used to describe specific implementations, and are not intended to limit the present disclosure. The terms "one" and "the" used herein which indicate a singular form are intended to include a plural form, unless expressly stated in the context. It should be further understood that the terms "comprise" and "be made of" used herein indicate the presence of the described features, integers, operations, elements and/or components, but do not exclude the presence or addition of one or more other features, integers, operations, elements, components and/or combinations thereof.

It should be understood that the terms "first", "second" and the like may be used herein to describe various elements, but those elements are not limited by those terms. Those terms are merely used for distinguishing one element from the other element. Therefore, without departing from the teaching of the present disclosure, a first element, a first component, or a first module described below can also be called a second element, a second component, or a second module.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

With the development of the communication technology and the network technology, most of the communication systems and the network systems have higher load requirements, and are faced with the demands for capacity reduction or capacity expansion with the change of services. For example, for the management domain of the core network in the 5G communication, due to the large-scale deployment of the 5G network slices, the management domain of the core network will need to manage more virtualized service elements to cope with the faster change of the slices; and for the service platform providing the microservices, due to the characteristics of the applications deployed in the microservices, the service platform will also need to manage more virtualized service elements to meet the application deployment requirements.

The change of the services affects a load of a system in real time, and the influence is mainly reflected in functions of the system such as performance statistics, alarming, and resource topology. Among those functions, the function of performance statistics is affected most directly, and the system needs more nodes to store and compute performance index data.

In order to cope with the influence of the fluctuation in the services on capacity reduction and capacity expansion, the system generally adopts a cluster form. For an existing cluster system, especially the existing Kubernetes cluster system, which has a bottom layer made of bare metal, there is no condition for adding new hardware; moreover, supportability and compatibility of an existing cloud platform used by the existing cluster system are not perfect, which increases the difficulty in capacity reduction and capacity expansion.

Current capacity reduction and capacity expansion methods for a cluster are merely limited to developing a capacity reduction or capacity expansion strategy according to a processor and remaining memory capacity of each node in the cluster, but fail to adaptively perform capacity reduction or capacity expansion according to the change of the services. In addition, there are existing systems that have no dynamic capacity expansion capability due to the use of the bare metal.

A capacity reduction and capacity expansion method for a cluster, a capacity reduction and capacity expansion control terminal, a computer-readable medium, and a capacity reduction and capacity expansion system provided by the present disclosure can be used for determining whether to perform capacity reduction or capacity expansion according to acquired performance data, and creating or removing a corresponding node on a cloud platform using a virtualization capability, so as to realize dynamic capacity reduction or capacity expansion of the cluster.

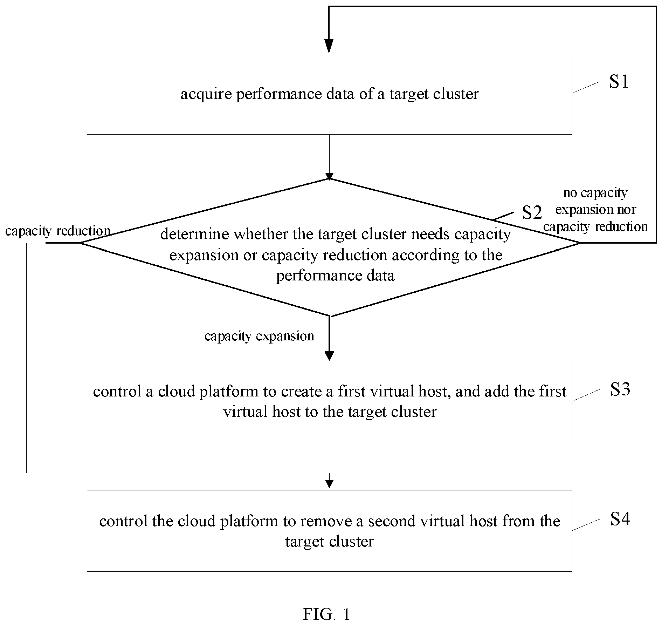

FIG. 1 is a flowchart illustrating a capacity reduction and capacity expansion method for a cluster according to the present disclosure. As shown in FIG. 1, the method may include operations S1 to S4.

In operation S1, performance data of a target cluster is acquired.

In the operation S1, the performance data of the target cluster is acquired from different dimensions and different layers, and may represent characteristic indexes of the target cluster and provide historical data for development of a capacity expansion policy and a capacity reduction policy.

In some implementations, before the performance data of the target cluster is acquired, the method further includes: analyzing a deployment form of an existing target cluster, and acquiring docking authentication information and an information record format during operation of services of the existing target cluster; and the docking authentication information may include Secure Shell Protocol (SSH) information and authentication information of each host.

In operation S2, it is determined whether the target cluster needs capacity expansion or capacity reduction according to the performance data.

Whether the target cluster needs the capacity expansion or the capacity reduction is determined according to the capacity expansion strategy and the capacity reduction strategy of the target cluster developed according to the performance data.

In the operation S2, when it is determined that the target cluster needs the capacity expansion, operation S3 is performed; when it is determined that the target cluster needs the capacity reduction, operation S4 is performed; and when it is determined that the target cluster needs neither the capacity expansion nor the capacity reduction, the operation S1 is performed again.

In operation S3, a cloud platform is controlled to create a first virtual host, and the first virtual host is added to the target cluster.

In some implementations, when the cloud platform is controlled to create the first virtual host, the cloud platform is also controlled to create virtual resources corresponding to the first virtual host at the same time, and the virtual resources include mirror resources, virtual port resources, cloud storage resources, etc. In some implementations, after the cloud platform creates the first virtual host and the corresponding virtual resources, the cloud platform is notified to report an identifier of the first virtual host and information about the virtual resources, and the reported identifier of the first virtual host and information about the virtual resources are persisted, that is, the reported identifier of the first virtual host and information about the virtual resources are stored locally as persisted information files through a file database such as BoltDB or SQlite or in the file format of json, cvc or xml, and are stored in a persisted information table.

In some implementations, after the first virtual host is started, a corresponding support suite is sent to the first virtual host, and the first virtual host is controlled to install the support suite.

In some implementations, a capacity reduction and capacity expansion control terminal corresponding to the capacity reduction and capacity expansion method for a cluster may be installed at the side of the cloud platform.

In operation S4, the cloud platform is controlled to remove a second virtual host from the target cluster.

In some implementations, the second virtual host is removed by means of RESTful interface or Command-Line Interface (CLI).

In some implementations, the second virtual host is a virtual host most newly added to the target cluster.

The capacity reduction and capacity expansion method for a cluster provided by the present disclosure can be used for determining whether the capacity reduction or the capacity expansion is needed according to the acquired performance data, and realizing dynamic capacity reduction or capacity expansion of the cluster by controlling the cloud platform to create or remove the virtual host. Thus, the method is not only applicable to existing general systems but also applicable to the existing systems that have no dynamic capacity expansion capability due to the use of the bare metal.

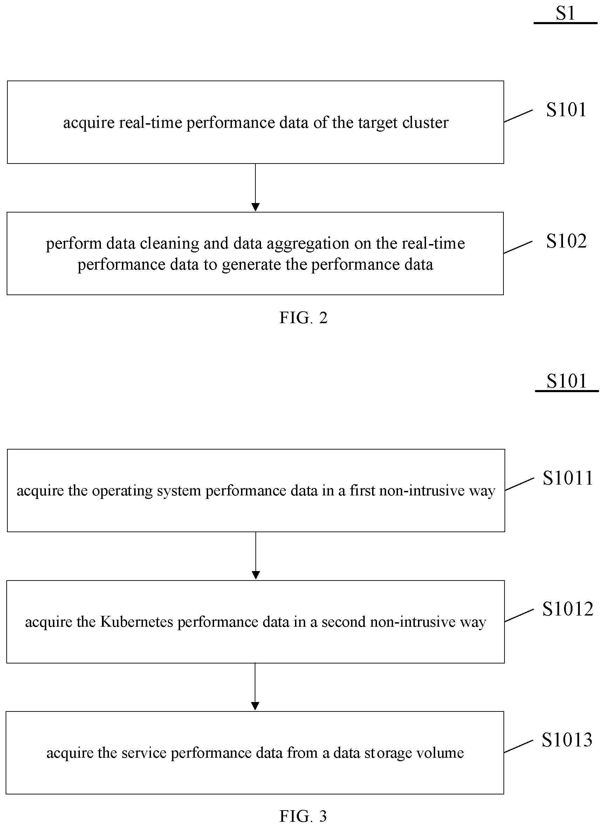

FIG. 2 is a flowchart of an exemplary implementation of the operation S1 shown in FIG. 1. Illustratively, the target cluster is a Kubernetes cluster; and as shown in FIG. 2, the operation S1 of acquiring the performance data of the target cluster may include operations S101 and S102.

In operation S101, real-time performance data of the target cluster is acquired.

The real-time performance data includes operating system performance data, Kubernetes performance data, and service performance data. The operating system performance data may include system logs, processor information, memory information, disk usage, and disk performance indexes; the Kubernetes performance data may include information related to nodes in the cluster, Deployment information, Replication Controller (RC) information, Replica Set (RS) information, and container information; and the service performance data may include application logs and other performance data during the operation of services.

In operation S102, the real-time performance data is subjected to data cleaning and data aggregation to generate the performance data.

The data cleaning may include: deleting data which are obviously abnormal, such as percentage-type data with values exceeding 100%; marking data which is possible to be abnormal, such as data with historical deviations greater than 15%; for strictly judged data, deleting other data reported by a task corresponding to the strictly judged data to ensure consistency of the data; and for a plurality of pieces of data reported for a single time point, performing deduplication to reserve one piece of data or combining the plurality of pieces of data according to a strategy. The real-time performance data subjected to the data cleaning is then stored in a temporary folder or a cache in the form of a temporary file.

When the data aggregation is performed, a read-only label is added to the real-time performance data in the temporary folder or the cache every preset time period such as 5 minutes, data of different physical nodes and data of different Kubernetes nodes are aggregated into one or more records in a uniform format, and a timestamp is added. After the aggregation is completed, the read-only labels are removed to generate the performance data. In addition, if the processing operation is timed out and is not completed as a response, the read-only labels are also removed.

In some implementations, the performance data generated after the aggregation is persisted, that is, the performance data is stored locally as persisted information files through a file database such as BoltDB or SQlite or in the file format of j son or cvc, and are stored in the persisted information table.

FIG. 3 is a flowchart of an exemplary implementation of the operation S 101 shown in FIG. 2. Illustratively, the real-time performance data is acquired in a non-intrusive way; and as shown in FIG. 3, the operation S101 of acquiring the real-time performance data of the target cluster may include operations S1011 to S1013.

In operation S1011, the operating system performance data is acquired in a first non-intrusive way.

The first non-intrusive way includes at least one of a Telnet way, an SSH way, a Secure File Transfer Protocol or SSH File Transfer Protocol (SFTP) way, a File Transfer Protocol (FTP) way, or a RESTful interface way.

In the existing technology, characteristic index information and performance data are collected in an intrusive way, for example, a traditional method for collecting network on-off data between nodes includes enabling Agent software to reside in each host and updating topology information of a whole cluster according to on and off states of a link between the Agent software. Unlike the intrusive way in the existing technology, if the non-intrusive way of the present disclosure is adopted to collect the network on-off data between the nodes, the data may be collected by using a system command to detect a connection state of a link at each node through an SSH tunnel.

In operation S1012, the Kubernetes performance data is acquired in a second non-intrusive way.

The second non-intrusive way includes at least one of the RESTful interface way or a CLI way.

In operation S1013, the service performance data is acquired from a data storage volume.

The data storage volume includes a HostPath or a Persistent Volume (PV); and the operation of acquiring the service performance data from the data storage volume is remotely pulling the service performance data in a service-defined format from the data storage volume according to corresponding Kubernetes specifications.

In some implementations, the application logs are further read from the persisted information files or acquired via a log system (e.g., an ELK system) interface.

The capacity reduction and capacity expansion method for a cluster provided by the present disclosure can be applied to the Kubernetes cluster, and can acquire the operating system performance data, the Kubernetes performance data and the service performance data in the non-intrusive way, and realize the dynamic capacity reduction or capacity expansion of the cluster with the change of the services according to the performance data from the different dimensions while performing the capacity reduction or capacity expansion according to hardware information such as remaining deployment resources.

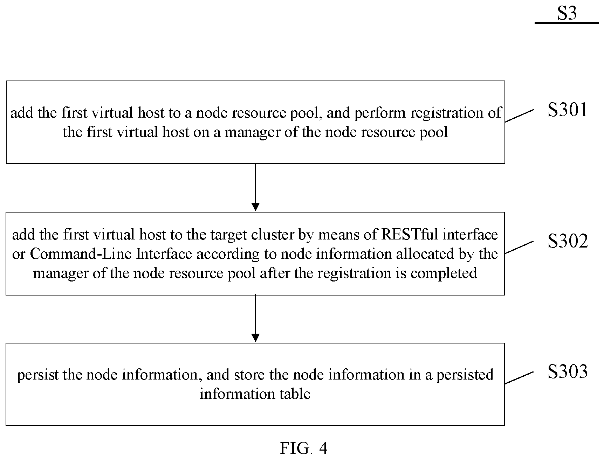

FIG. 4 is a flowchart of an exemplary implementation of the operation S3 shown in FIG. 1. Illustratively, before adding the first virtual host to the target cluster in the operation S3, the method further includes: operation S301, adding the first virtual host to a node resource pool, and performing registration of the first virtual host on a manager of the node resource pool.

The registration of the first virtual host is performed by means of RESTful interface.

In the operation S3, adding the first virtual host to the target cluster may include: operation S302, adding the first virtual host to the target cluster by means of RESTful interface or by means of CLI according to node information allocated by the manager of the node resource pool after the registration is completed.

The node information may include a node IP address and a node label.

After adding the first virtual host to the target cluster in the operation S3, the method further includes: operation S303, persisting the node information, and storing the node information in the persisted information table.

The node information is stored locally as a persisted information file through a file database such as BoltDB or SQlite or in the file format of json, cvc or xml, and is stored in the persisted information table.

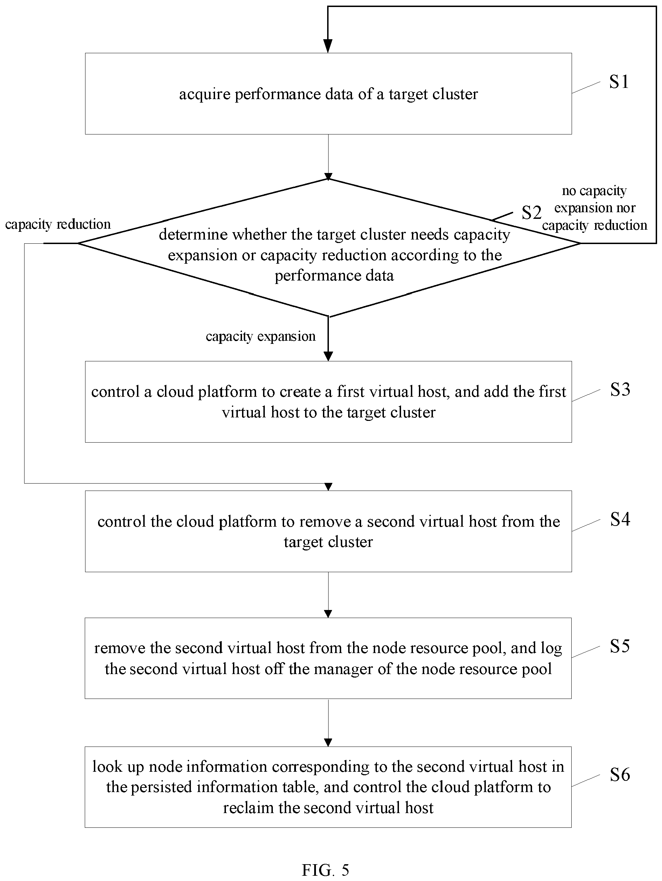

FIG. 5 is a flowchart illustrating a capacity reduction and capacity expansion method for a cluster according to the present disclosure. The method shown in FIG. 5 is proposed on the basis of the method shown in FIG. 1, and reference may be made to the above descriptions for the descriptions of the operations S1 to S4. As shown in FIG. 5, after the operation S4 of controlling the cloud platform to remove the second virtual host from the target cluster, the method may further include operations S5 and S6.

In operation S5, the second virtual host is removed from the node resource pool, and is logged off the manager of the node resource pool.

The second virtual host is logged off by means of RESTful interface.

In operation S6, node information corresponding to the second virtual host is looked up in the persisted information table, and the cloud platform is controlled to reclaim the second virtual host.

In some implementations, resource information corresponding to the second virtual host is also looked up in the persisted information table, and the cloud platform is controlled to delete virtualized resources corresponding to the second virtual host.

The capacity reduction and capacity expansion method for a cluster provided by the present disclosure can be used for correspondingly performing capacity reduction or capacity expansion of the node resource pool.

The capacity reduction and capacity expansion method for a cluster provided by the present disclosure is described in detail below in conjunction with practical applications.

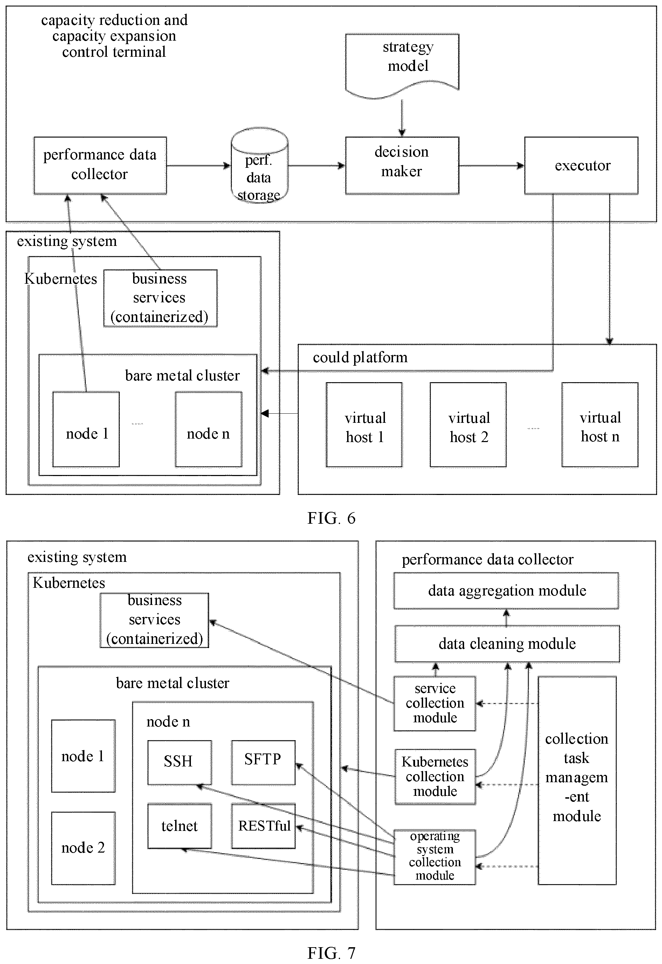

FIG. 6 is a block diagram of a capacity reduction and capacity expansion system for a cluster according to the present disclosure. As shown in FIG. 6, the capacity reduction and capacity expansion system includes a capacity reduction and capacity expansion control terminal and a cloud platform. The capacity reduction and capacity expansion control terminal includes a performance data collector, a performance data storage, a decision maker, a strategy model, and an executor; the cloud platform is capable of creating and managing a plurality of virtual hosts; and a corresponding target cluster is a Kubernetes cluster, which exists in an existing Kubernetes system, has a bottom layer made of bare metal, and includes a plurality of nodes.

Firstly, the performance data collector collects performance data of the cluster in a non-intrusive way, and transmits the performance data to the performance data storage to be stored as historical data.

FIG. 7 is a block diagram of the performance data collector according to the present disclosure. As shown in FIG. 7, the performance data collector includes a data aggregation module, a data cleaning module, a service collection module, a Kubernetes collection module, an operating system collection module, and a collection task management module.

The collection task management module is configured to build a collection task according to task specifications configured in real time by a user or set in advance by the user, and manage and allocate collection tasks to the service collection module, the Kubernetes collection module and the operating system collection module; the service collection module is configured to collect service performance data and application logs of the cluster by accessing business services of the cluster, the Kubernetes collection module is configured to collect Kubernetes performance data of the cluster, and the operating system collection module is configured to collect operating system performance data of the cluster by means of Telnet, SSH, SFTP, or RESTful interface; the data cleaning module is configured to perform data cleaning on the collected real-time performance data; and the data aggregation module is configured to aggregate the real-time performance data obtained after the data cleaning to generate the performance data.

Still with reference to FIG. 6, the decision maker determines whether the cluster needs capacity reduction or capacity expansion according to the performance data and a capacity reduction strategy and a capacity expansion strategy generated by the strategy model; and the executor finally performs capacity reduction or capacity expansion on the cluster according to a decision of the decision maker. When it is determined that the cluster needs the capacity expansion, the executor controls the cloud platform to create a virtual host or appoint an idle virtual host already created, adds the virtual host to a node resource pool, and adds the virtual host to the cluster after registering the virtual host on a manager of the node resource pool, thereby realizing the capacity expansion; and when it is determined that the cluster needs the capacity reduction, the executor controls the cloud platform to remove a virtual host most newly added to the cluster, removes the virtual host from the node resource pool, and logs the virtual host off the manager of the node resource pool, thereby realizing the capacity reduction.

The present disclosure further provides a capacity reduction and capacity expansion control terminal, including: one or more processors; and a storage device configured to store one or more programs; and when executed by the one or more processors, the one or more programs cause the one or more processors to carry out the method described in any of the implementations above.

The present disclosure further provides a computer-readable medium having a computer program stored thereon. When the program is executed by a processor, the method described in any of the implementations above is carried out.

The present disclosure further provides a capacity reduction and capacity expansion system for a cluster, including: a capacity reduction and capacity expansion control terminal and a cloud platform; and the capacity reduction and capacity expansion control terminal is the capacity reduction and capacity expansion control terminal described in the above implementations.

The present disclosure provides the capacity reduction and capacity expansion method for a cluster, the capacity reduction and capacity expansion control terminal, the computer-readable medium and the capacity reduction and capacity expansion system for a cluster. The capacity reduction and capacity expansion method for a cluster can be applied to the capacity reduction and capacity expansion control terminal, and can determine whether to perform the capacity reduction or the capacity expansion according to the collected performance data, and create or remove the corresponding node on the cloud platform using the virtualization capability, thereby realizing the dynamic capacity reduction or capacity expansion of the cluster. Thus, the problem that the cluster cannot adaptively perform capacity reduction or capacity expansion according to the change of the services can be solved, and the method is also applicable to the existing systems, which have no dynamic capacity expansion capability due to the use of the bare metal, for performing corresponding capacity reduction or capacity expansion.

It should be understood by those of ordinary skill in the art that the functional modules/units in all or some of the operations and devices disclosed in the above method may be implemented as software, firmware, hardware, or suitable combinations thereof. If implemented as hardware, the division between the functional modules/units stated above is not necessarily corresponding to the division of physical components; and for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory, a Read-Only Memory, an Electrically Erasable Programmable Read-Only Memory (EEPROM), a flash memory or other storage technology, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation can be used alone or in combination with features, characteristics and/or elements described in connection with other implementations. Therefore, it should be understood by those of ordinary skill in the art that various changes in the forms and the details can be made without departing from the scope of the present disclosure of the appended claims.

## Claims

1. A capacity reduction and capacity expansion method for a cluster, comprising:
acquiring performance data of a target cluster;
determining whether the target cluster needs capacity expansion or capacity reduction according to the performance data;
in response to determining that the target cluster needs the capacity expansion, controlling a cloud platform to create a first virtual host, and adding the first virtual host to the target cluster; and
in response to determining that the target cluster needs the capacity reduction, controlling the cloud platform to remove a second virtual host from the target cluster.

2. The method of claim 1, wherein the target cluster is a Kubernetes cluster; and acquiring the performance data of the target cluster comprises:
acquiring real-time performance data of the target cluster, with the real-time performance data comprising: operating system performance data, Kubernetes performance data, and service performance data; and
performing data cleaning and data aggregation on the real-time performance data to generate the performance data.

3. The method of claim 2, wherein the real-time performance data is acquired in a non-intrusive way; and acquiring the real-time performance data of the target cluster comprises:
acquiring the operating system performance data in a first non-intrusive way, the first non-intrusive way comprising at least one of a Telnet way, a Secure Shell Protocol way, a Secure File Transfer Protocol way, a File Transfer Protocol way, or a RESTful interface way;
acquiring the Kubernetes performance data in a second non-intrusive way, the second non-intrusive way comprising at least one of the RESTful interface way or a Command-Line Interface way; and
acquiring the service performance data from a data storage volume.

4. The method of claim 1, wherein before adding the first virtual host to the target cluster, the method further comprises:
adding the first virtual host to a node resource pool, and performing registration of the first virtual host on a manager of the node resource pool; and
adding the first virtual host to the target cluster comprises:
adding the first virtual host to the target cluster by means of RESTful interface or Command-Line Interface according to node information allocated by the manager of the node resource pool after the registration is completed.

5. The method of claim 4, further comprising:
persisting the node information, and storing the node information in a persisted information table.

6. The method of claim 5, after controlling the cloud platform to remove the second virtual host from the target cluster, further comprising:
removing the second virtual host from the node resource pool, and logging the second virtual host off the manager of the node resource pool; and
looking up node information corresponding to the second virtual host in the persisted information table, and controlling the cloud platform to reclaim the second virtual host.

7. The method of claim 1, wherein the second virtual host is a virtual host most newly added to the target cluster.

8. A capacity reduction and capacity expansion control terminal, comprising:
one or more processors; and
a storage device configured to store one or more programs;
when executed by the one or more processors, the one or more programs cause the one or more processors to carry out the method of any one of claims 1 to 7.

9. A computer-readable medium having a computer program stored thereon which, when executed by a processor, causes the processor to carry out the method of any one of claims 1 to 7.

10. A capacity reduction and capacity expansion system for a cluster, comprising: a capacity reduction and capacity expansion control terminal and a cloud platform;
wherein the capacity reduction and capacity expansion control terminal is the capacity reduction and capacity expansion control terminal of claim 8.
